# EUROPEAN PATENT SPECIFICATION

(11) **EP 0 609 027 B1**
(45) Date of publication and mention of the grant of the patent: **25.11.1998**
(21) Application number: 94300443.2
(22) Date of filing: 20.01.1994
(51) Int. Cl.: F16L 33/20, F16L 33/22

(54) **Protective end piece for tubes**
Schutzendstück für Rohre
Bout de protection pour tuyaux

(30) Priority: 27.01.1993 GB 9301619
(43) Date of publication of application: 03.08.1994
(73) Proprietor: DRAFTEX INDUSTRIES LIMITED, Edinburgh EH2 3AP, Scotland (GB)
(72) Inventor: Lallement, Serge, F-44240 La Chapelle Sur Erdre (FR); Ausias, Gilles, F-44300 Nantes (FR)
(74) Representative: Knott, Stephen Gilbert

(56) References cited:
- EP-A- 0 440 564
- DE-A- 3 914 645
- DE-C- 3 136 018
- GB-A- 322 567
- GB-A- 2 202 598

## Description

This invention relates to a fastening arrangement for protecting the end region of a relatively flexible tube and for securing the end region to a more rigid pipe end of predetermined external diameter, the end region of the tube having smooth inside and outside surfaces of uniform diameter, the fastening arrangement comprising an end piece having axially directed inner and outer tubular wall portions, the inner and outer wall portions being integrally connected by a radially directed end portion for covering at least part of the end of the tube.

Such a fastening arrangement is known from EP-A-440 564. In the known arrangement, however, the end piece comprises two different parts in which each part has portions of different diameters which define a space in which a sealing ring can be located. The two parts have to be clipped together and attached to a separate tubular part which is then clamped to the more rigid pipe end by the clamping means. Such an arrangement is complex to manufacture and assemble. This invention aims to simplify the manufacture and assembly procedures.

Such a fastening arrangement is also known from DE-A-3 914 645. In this known arrangement, the inner tubular wall portion has a circumferential groove formed therein whose depth extends radially outwards to press into the wall of the end region of the tube, the groove carrying a sealing ring. Such an arrangement is difficult to assemble onto the tube and in fact the use of a friction-reducing agent is recommended. The invention aims to overcome this problem.

According to the invention, therefore, the known arrangement is characterised in that the inner wall portion is provided with an external wall surface which is smooth and is a matching close fit inside the end region of the tube and an internal wall surface having an internal diameter matching the predetermined external diameter of the more rigid pipe end, the outer wall portion has an internal wall surface which is a matching close fit around the outside of the end region of the tube and an external wall surface around which clamping means extend circumferentially when the more rigid pipe end is closely fitted inside the inner wall portion.

Elastomer tubes used for conducting fluids in motor vehicles have a tendency to break by tearing when submitted to high pressure. Such tears may begin with striations in the elastomer caused by tightening a collar to retain the tube on the relatively rigid pipe stub. The invention aims to avoid this problem.

Tubes are generally sold on their own. In order to mount such a tube, it is usual to place a collar over the tube and to maintain the collar longitudinally and in the correct orientation before tightening the collar to secure the tube on the pipe stub.

The invention aims to assist in this process.

Fastening arrangements embodying the invention for elastomer tubes will now be described, by way of example only, with reference to the accompanying drawings in which:-
Figure 1 is a longitudinal section through an end of an elastomer tube with an end piece forming part of one of the fastening arrangements mounted on it and also showing a fixing collar;
Figure 2 is a longitudinal section corresponding to Figure 1 but showing a modified form of the end piece before final assembly;
Figure 3 corresponds to Figure 2 but shows a further modified end piece; and
Figure 4 is a longitudinal section showing a pair of assembled tubes and end pieces.

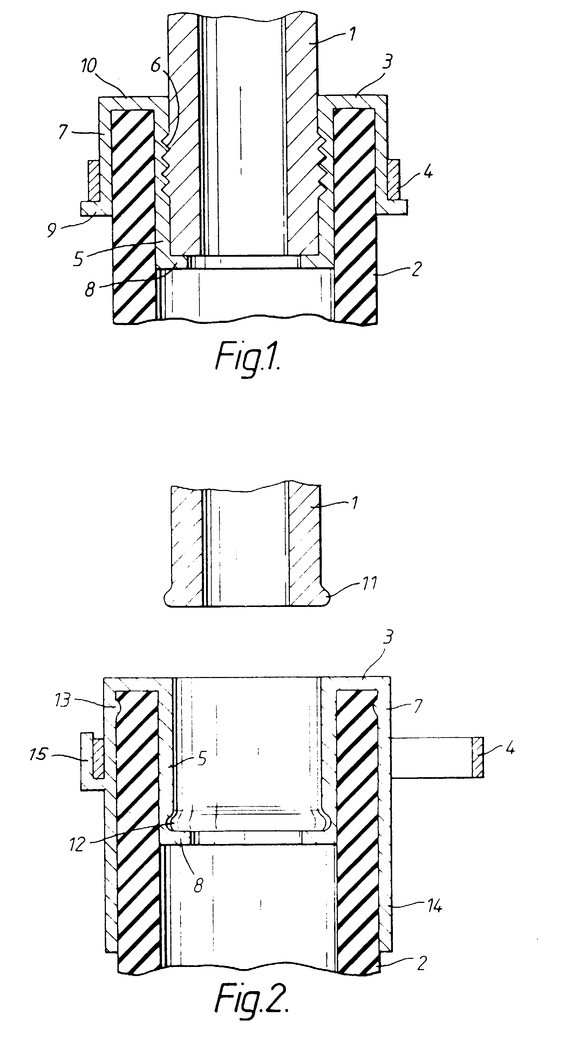

With reference to Figure 1, the rigid end stub 1 of a pipe has mounted on it a tube 2 made of an elastomer. Interposed between the tube 2 and the pipe stub 1 is a protective end piece 3. A fixing collar 4 is located around the end piece 3. The end piece 3 has an inner cylindrical wall 5 which is a close fit inside the tube 2. An axially outer end of the inner wall 5 extends radially outwards from the axis to provide an external annular end face 10. Integral with the end face 10 is a cylindrical outer wall 7 which extends axially away from the end face 10 in the same direction and substantially equidistant from the inner wall 5. Between the inner wall 5 and the outer wall 7 is thus formed a rebate within which the end of the tube 2 is located.

The inner wall 5 extends axially within the end portion of the tube 2. It is terminated internally by an annular abutment 8 formed by a wall which extends radially inwards of the tube 2.

Outer wall 7 ends in a radially outwardly extending lip 9 which prevents the tightening collar 4 from slipping off the end piece 3 and onto the tube 2.

The cylindrical inner wall 5 of the end piece 3 prevents direct contact between the pipe stub 1 and the inner wall of the tube 2 and thus prevents scratches or striations being made in its elastomer surface by the pipe stub 1, and in particular, by ribs 6 which are often present on pipe stubs.

Since the tightening collar 4 acts on the outer wall 7 of the end piece 3 and not directly on the tube 2, the tube 2 is protected from the collar 4 which might otherwise cause damage to the the elastomer surface.

The protection conferred by the wall 7 permits the tightening collar 4 to be tightened to a greater extent than would otherwise be possible, greatly reducing the risk of the tube 2 slipping off the pipe stub 1.

The abutment 8 provides positive location of the tube 2 on the stub 1 by abutting on the end face of the stub 1. This prevents insertion of the stub 1 beyond the zone of the tube protected by the bonnet 3. Similarly, the end of the tube 2 abuts the inner surface of the end face 10.

The end of the tube 2 is also protected by the end piece 3 from leaks of fluid, in particular from leaks of hydrocarbons which tend to migrate across this zone. This is particularly advantageous where the tube is of the reinforced type having woven or knitted reinforcement or is formed of two materials having interfaces of different compositions sensitive to leaks. Atmospheric ozone tends to attack the stressed end of the tube but such attack is limited by the protection provided by the end piece 3. The end face 10 linking the inner 5 and outer 7 walls of the end piece 3 protects the vulnerable cut end of the tube 2.

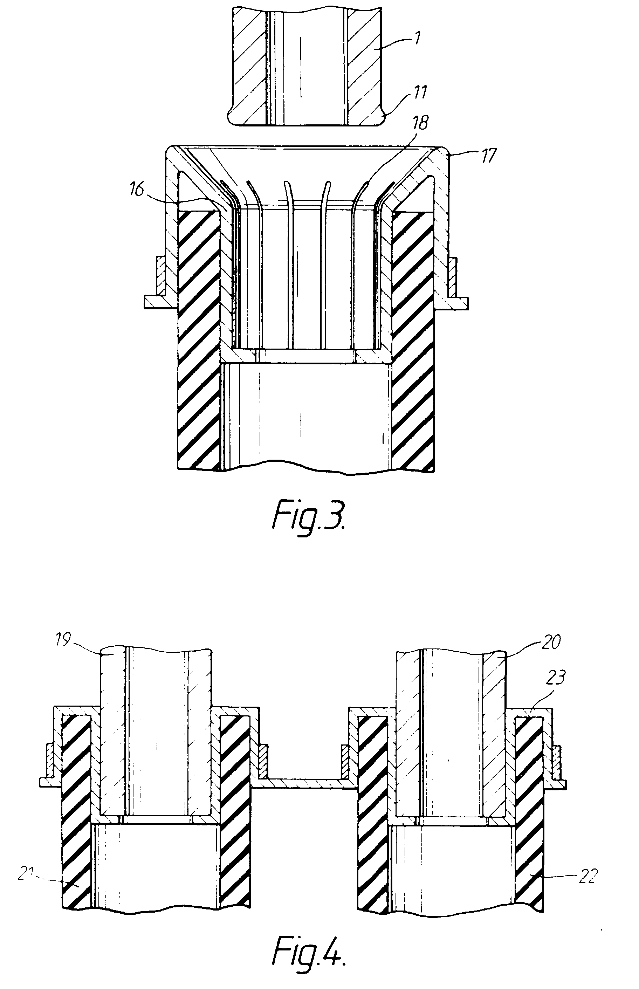

A modified form of the end piece is shown in Figure 2 in which components similar to those of Figure 1 bear the same reference numerals. Stub end 1 has a generally cylindrical configuration but over the end portion has an olive 11 formed by a smoothly rounded swelling in the outer surface. The end piece 3 is provided with an annular groove 12 formed in the inner wall 5 adjacent the abutment 8. This annular groove 12 has a shape which matches the profile of the olive 11 and in which the olive 11 is accepted when the tube 2 is pushed home on the stub end 1.

On the inside face of the outer wall 7 of the end piece 3, a smoothly rounded rim 13 is formed which projects radially inwards to grip the tube 2. The outer wall 7 extends for a greater axial length of the tube 2 than in the first form shown in Figure 1. The extension 14 of the wall 7 reduces stress in the tube 2 at the end of the pipe stub 1. It also helps to absorb vibration and pressure fluctuations in the tube.

A retaining spur 15 is formed on the outer wall 7 of the end piece to retain the collar 4 in the correct angular position until the tube 2 is mounted onto the stub 1.

If the end piece 3 is formed by thermal forming, its end face may be very rigid. To reduce the problem which this may cause, the end face may be given an inclined shape to form a conical end face 17 as shown in Figure 3. This aids entry of the stub 1 by permitting stretching in the region 16. The conical shape also gives a centring action. Undulations 18 in the inner wall portion 5 enable it to be deformed slightly to facilitate insertion of the olive 11 and tightening of the collar.

Figure 4 shows a further embodiment in which a twin end piece 23 protects two tubes 21,22 in tandem which fit to respective end pieces 19 and 20.

As explained, the arrangements described can be more tightly secured because of the protection given to the tube by the end piece. This permits the use of simple relatively rigid fixing collars instead of more expensive elastic retaining collars.

The end pieces described may be made of a material having a high coefficient of friction to add to the security of retention.

The end pieces may carry a visible code or be coloured to permit differentiation between the tubes and the nature of fluids they can carry.

As the tube is protected against damage caused by the pipe stub, the form and construction of the pipe stub is less critical.

## Claims

1. A fastening arrangement for protecting the end region of a relatively flexible tube (2) and for securing the end region to a more rigid pipe end (1) of predetermined external diameter, the end region of the tube (2) having smooth inside and outside surfaces of uniform diameter, the fastening arrangement comprising an end piece (3) having axially directed inner and outer tubular wall portions (5,7), the inner and outer wall portions (5,7) being integrally connected by a radially directed end portion (10) for covering at least part of the end of the tube (2), characterised in that the inner wall portion (5) is provided with an external wall surface which is smooth and is a matching close fit inside the end region of the tube (2) and an internal wall surface having an internal diameter matching the predetermined external diameter of the more rigid pipe end (1), the outer wall portion (7) has an internal wall surface which is a matching close fit around the outside of the end region of the tube (2) and an external wall surface around which clamping means (4) extend circumferentially when the more rigid pipe end (1) is closely fitted inside the inner wall portion (5).

2. A fastening arrangement as claimed in claim 1, characterised in that the inner wall portion (5) is provided with an abutment (8) to prevent relative insertion of the rigid pipe end (1) beyond a predetermined point.

3. A fastening arrangement as claimed in claim 1, characterised in that the inner end of the inner wall portion (5) includes a radially inwardly extending annular extension (8) to prevent relative insertion of the rigid pipe end (1) beyond a predetermined point.

4. A fastening arrangement as claimed in any preceding claim, characterised in that the outer portion (7) is provided with location means (9) for locating the clamping means (4).

5. A fastening arrangement as claimed in claim 4, characterised in that the location means comprises a radially outwardly extending abutment (9).

6. A fastening arrangement as claimed in claim 5, characterised in that the location means (9) further comprises an axially extending wall (15) connected to the abutment (9) and spaced apart from the outer portion (7) to form a rebate for holding and positioning the clamping means (4).

7. A fastening arrangement as claimed in any preceding claim, characterised in that the end piece (3) includes a projection (13) for engaging a surface of the flexible tube (2) to aid retention of the end piece (3) on the flexible tube (2).

8. A fastening arrangement as claimed in claim 7, characterised in that the projection (13) is a peripheral rib projecting inwardly from an inner face of the outer portion (7) to engage a surface of the tube (2).

9. A fastening arrangement as claimed in any preceding claim, characterised in that the inner portion (5) is provided with a male or female formation for matchingly engaging a respective formation on the rigid pipe end (1).

10. A fastening arrangement as claimed in claim 9, characterised in that one said formation is an annular rebate on the inner portion (5) and the other said formation is an annular projection on the rigid pipe end (1).

11. A fastening arrangement as claimed in any preceding claim, characterised in that the end portion (10) is inclined with respect to the inner and outer portions (5,7) to form a concavely shaped conical end face.

12. A fastening arrangement as claimed in any preceding claim, characterised in that the outer portion (7) extends for a greater axial length than the inner portion (5).

13. A fastening arrangement as claimed in any preceding claim, characterised in that axially directed undulations are provided in the inner portion (5) to permit distortion of the end piece and thus ease relative insertion of the rigid pipe (1).

## Patentansprüche

1. Befestigungsanordnung zum Schutz des Endbereiches eines relativ flexiblen Rohres (2) und zum Befestigen des Endbereichs an einem steiferen Leitungsende (1) mit einem vorbestimmten äußeren Durchmesser, wobei der Endbereich des Rohres (2) glatte innere und äußere Oberflächen mit konstantem Durchmesser aufweist und die Befestigungsanordnung ein Endstück (3) aufweist, das axial ausgerichtete innere und äußere Wandbereiche (5, 7) aufweist, die einstückig durch einen radial ausgerichteten Endbereich (10) verbunden sind, um wenigstens einen Teil des Endes des Rohres (2) zu überdecken,
**dadurch gekennzeichnet,**
daß der innere Wandbereich (5) mit einer äußeren Wandoberfläche versehen ist, die glatt ist und einen in den Endbereich des Rohres (2) passenden Abschluß bildet, sowie mit einer inneren Wandoberfläche versehen ist, die einen inneren Durchmesser aufweist, der dem vorbestimmten äußeren Durchmesser des steifen Leitungsendes (1) entspricht, und daß der äußere Wandbereich (7) eine innere Wandoberfläche aufweist, die einen um die Außenseite des Endbereiches des Rohres (2) passenden Abschluß bildet, sowie eine äußere Wandoberfläche aufweist, um deren Umfang sich ein Klemmittel (4) erstreckt, wenn das steifere Leitungsende (1) genau in den inneren Wandbereich (5) eingesetzt ist.

2. Befestigungsanordnung nach Anspruch 1, dadurch gekennzeichnet, daß der innere Wandbereich (5) mit einem Auflager (8) versehen ist, um ein gegenseitiges Einfügen des steifen Endes (1) über einen vorbestimmten Punkt hinaus zu verhindern.

3. Befestigungsanordnung nach Anspruch 1, dadurch gekennzeichnet, daß das innere Ende des inneren Wandbereiches (5) einen sich radial einwärts erstreckenden ringförmigen Ansatz (8) aufweist, um ein gegenseitiges Einfügen des steifen Leitungsendes (1) über einen vorbestimmten Punkt hinaus zu verhindern.

4. Befestigungsanordnung nach einem der vorhergehenden Ansprüche, dadurch gekennzeichnet, daß der äußere Bereich (7) mit Aufnahmemitteln (9) versehen ist, um die Klemmittel (4) festzulegen.

5. Befestigungsanordnung nach Anspruch 4, dadurch gekennzeichnet, daß das Aufnahmemittel ein sich radial auswärts erstreckendes Auflager (9) umfaßt.

6. Befestigungsanordnung nach Anspruch 5, dadurch gekennzeichnet, daß das Aufnahmemittel (9) weiterhin eine sich axial erstreckende Wand (15) umfaßt, die mit dem Auflager (9) verbunden ist und vom äußeren Bereich (7) beabstandet ist, um eine Fuge zum Halten und Positionieren des Klemmittels (4) zu bilden.

7. Befestigungsanordnung nach einem der vorhergehenden Ansprüche, dadurch gekennzeichnet, daß das Endstück (3) einen Vorsprung (13) umfaßt, um mit einer Oberfläche des flexiblen Rohres (2) in Eingriff zu treten, um das Festhalten des Endstückes (3) auf dem flexiblen Rohr (2) zu unterstützen.

8. Befestigungsanordnung nach Anspruch 7, dadurch gekennzeichnet, daß der Vorsprung (13) eine Umfangsrippe ist, die sich von einer inneren Fläche des äußeren Bereiches (7) einwärts erstreckt, um mit einer Oberfläche des Rohres (2) in Eingriff zu treten.

9. Befestigungsanordnung nach einem der vorhergehenden Ansprüche, dadurch gekennzeichnet, daß der innere Bereich (5) mit einer Stecker- oder Kupplungsformation versehen ist, um mit einer entsprechenden Formation am steifen Leitungsende (1) passend in Eingriff zu treten.

10. Befestigungsanordnung nach Anspruch 9, dadurch gekennzeichnet, daß eine der Formationen eine ringförmige Fuge am inneren Bereich (5) ist und die andere Formation ein ringförmiger Vorsprung am steifen Leitungsende (1) ist.

11. Befestigungsanordnung nach einem der vorhergehenden Ansprüche, dadurch gekennzeichnet, daß der Endbereich (10) bezüglich der inneren und äußeren Bereiche (5, 7) geneigt ist, um eine konkav geformte konische Endfläche zu bilden.

12. Befestigungsanordnung nach einem der vorhergehenden Ansprüche, dadurch gekennzeichnet, daß der äußere Bereich (7) sich über eine größere axiale Länge erstreckt als der innere Bereich (5).

13. Befestigungsanordnung nach einem der vorhergehenden Ansprüche, dadurch gekennzeichnet, daß im inneren Bereich (5) axial gerichtete Riffelungen vorgesehen sind, um eine Verformung des Endstücks zu erlauben und somit das gegenseitige Einfügen der steifen Leitung (1) zu erleichtern.

## Revendications

1. Un dispositif de fixation destiné à assurer la protection de la zone de bout d'un tube (2) relativement flexible et à assurer la zone d'extrémité à une extrémité de tube (1) plus rigide, d'un diamètre extérieur prédéterminé, la zone d'extrémité du tube (2) ayant des surfaces intérieures et extérieures lisses d'un diamètre uniforme, le dispositif de fixation comprenant une pièce d'extrémité (3) ayant des parties de paroi tubulaire intérieure et extérieure (5, 7) orientées axialement, les parties de paroi intérieure et extérieure (5, 7) étant reliées d'une seule pièce par une partie d'extrémité (10) orientée radialement, afin de couvrir au moins une partie de l'extrémité du tube (2), caractérisé en ce que la partie de paroi intérieure (5) est dotée d'une surface de paroi extérieur, qui est lisse et s'adapte avec un montage serré à l'intérieur de la zone d'extrémité du tube (2), et d'une surface de paroi intérieur ayant un diamètre intérieur s'adaptant au diamètre extérieur prédéterminé de l'extrémité de tube (1) plus rigide, la partie de paroi extérieure (7) présente une surface de paroi intérieure, qui s'adapte avec un montage serré autour de l'extérieur de la zone d'extrémité du tube (2), et une surface de paroi extérieure autour de laquelle des moyens de serrage (4) s'étendent de façon circonférentielle, lorsque l'extrémité de tube (1) plus rigide est montée de façon serrée à l'intérieur de la partie de paroi intérieure (5).

2. Un dispositif de fixation selon la revendication 1, caractérisé en ce que la partie de paroi intérieure (5) est dotée d'une butée (8) destinée à empêcher tout insertion relative de l'extrémité de tube (1) rigide au-delà d'un point prédéterminé.

3. Un dispositif de fixation selon la revendication 1, caractérisé en ce que l'extrémité intérieure de la partie de paroi intérieure (5) comprend une extension annulaire (8) s'étendant radialement intérieurement, afin d'empêcher toute insertion relative de l'extrémité de tube (1) rigide au-delà d'un point prédéterminé.

4. Un dispositif de fixation selon l'une quelconque des revendications précédentes, caractérisé en ce que la partie extérieure (7) est dotée de moyens de positionnement (9) destinés à positionner les moyens de serrage (4).

5. Un dispositif de fixation selon la revendication 4, caractérisé en ce que les moyens de positionnement comprennent une butée (9) s'étendant radialement vers l'extérieur.

6. Un dispositif de fixation selon la revendication 5, caractérisé en ce que les moyens de positionnement (9) comprennent en outre une paroi (15) s'étendant axialement, reliée à la butée (9) et espacée de la partie extérieure (7) pour former un embrèvement destiné à maintenir et positionner les moyens de serrage (4).

7. Un dispositif de fixation selon l'une quelconque des revendications précédentes, caractérisé en ce que la pièce d'extrémité (3) comprend une saillie (13) destinée à être mise en contact avec une surface du tube flexible (2), pour aider à la rétention de la pièce d'extrémité (3) sur le tube flexible (2).

8. Un dispositif de fixation selon la revendication 7, caractérisé en ce que la saillie (13) est une nervure périphérique se projetant intérieurement depuis une face intérieure de la partie extérieure (7) pour venir en contact avec une surface du tube (2).

9. Un dispositif de fixation selon l'une quelconque des revendications précédentes, caractérisé en ce que la partie intérieure (5) est dotée d'une formation mâle ou femelle, destinée à venir en prise avec adaptation sur une formation respective du tube d'extrémité (1) rigide.

10. Un dispositif de fixation selon la revendication 9, caractérisé en ce que la dite première formation est un embrèvement annulaire ménagé sur la partie intérieure (5) et l'autre dite formation est une saillie annulaire ménagée sur l'extrémité de tube (1) rigide.

11. Un dispositif de fixation selon l'une quelconque des revendications précédentes, caractérisé en ce que la partie d'extrémité (10) est inclinée par rapport aux parties intérieure et extérieure (5, 7) en vue de former une face d'extrémité conique à forme concave.

12. Un dispositif de fixation selon l'une quelconque des reven.dications précédentes, caractérisé en ce que la partie extérieure (7) s'étend sur une longueur axiale supérieure à la partie intérieure (5).

13. Un dispositif de fixation selon l'une quelconque des revendications précédentes, caractérisé en ce que des ondulations orientées axialement sont ménagées dans la partie intérieure (5), en vue de permettre une distorsion de la pièce d'extrémité et de faciliter ainsi l'insertion relative du tube rigide (1).
